# DEMANDE DE BREVET EUROPEEN

(11) **EP 1 168 576 A1**
(43) Date de publication de la demande: **02.01.2002**
(21) Numéro de dépôt: 01810593.2
(22) Date de dépôt: 18.06.2001
(51) Int. Cl.: H02K 3/52

(54) **Ensemble d'un moteur électrique et d'au moins un connecteur et procédé de fabrication de celui-ci**

(30) Priorité: 23.06.2000 EP 00810555
(71) Demandeur: Saia-Burgess Murten AG, 3280 Murten (CH)
(72) Inventeur: Bourqui, Yvan, 1720 Corminboeuf (CH)
(74) Mandataire: AMMANN INGENIEURS-CONSEILS EN PROPRIETE INTELLECTUELLE SA BERNE

(57) **Abrégé**

Le corps de bobine (2) du moteur (1) présente des encoches (2a) dans lesquels les fils du bobinage du moteur se terminent. Des broches (7) de connecteur sont forcées avec leurs pièces de connexion en forme de fourchettes (7b) dans les encoches (2a), établissant ainsi la connexion galvanique entre les fils et les broches (7).
Un col de connecteur (6) est placé sur les broches (7) qui traversent le fond du col. La fabrication du moteur est facilitée par l'absence de soudures et l'utilisation des broches de connecteur (7) pour établir la liaison électrique entre le bobinage du moteur et le connecteur d'un câble d'alimentation et de commande.

## Description

Les systèmes connus de connexion pour moteurs électriques sont compliqués et difficiles à automatiser. Ils nécessitent souvent des soudures et/ou le montage de petits éléments ce qui complique le montage. Il est un but de la présente invention de simplifier le montage de moteurs électriques, en particulier les petits moteurs d'une puissance jusqu'à 2 W, et ainsi de faciliter l'automatisation du montage.

Ce but est atteint selon la revendication 1. La connexion électrique et mécanique du moteur est ainsi réalisée d'une manière très simple et facile à automatiser.

L'invention permet de simplifier plus particulièrement le branchement électrique d'un moteur, en particulier d'un moteur pas-à-pas, en évitant des adaptateurs entre le ou les enroulement(s) du moteur et le connecteur pour le câble de commande et d'alimentation, et d'éviter des soudures, grâce à la double fonction des broches de connecteur pour établir la connexion directe entre les fils d'enroulement et le câble d'alimentation et de commande.

L'invention sera expliquée plus en détail ci-après à l'aide de deux exemples d'exécution représentés dans les dessins annexés. Dans ceux-ci:
la figure 1 est une vue perspective d'un système de connexion connu,
la figure 2 est une vue perspective schématique d'un exemple d'exécution selon l'invention,
la figure 3 montre une vue perspective plus détaillée d'un exemple d'exécution, et
la figure 4 est une coupe par une partie d'un connecteur.

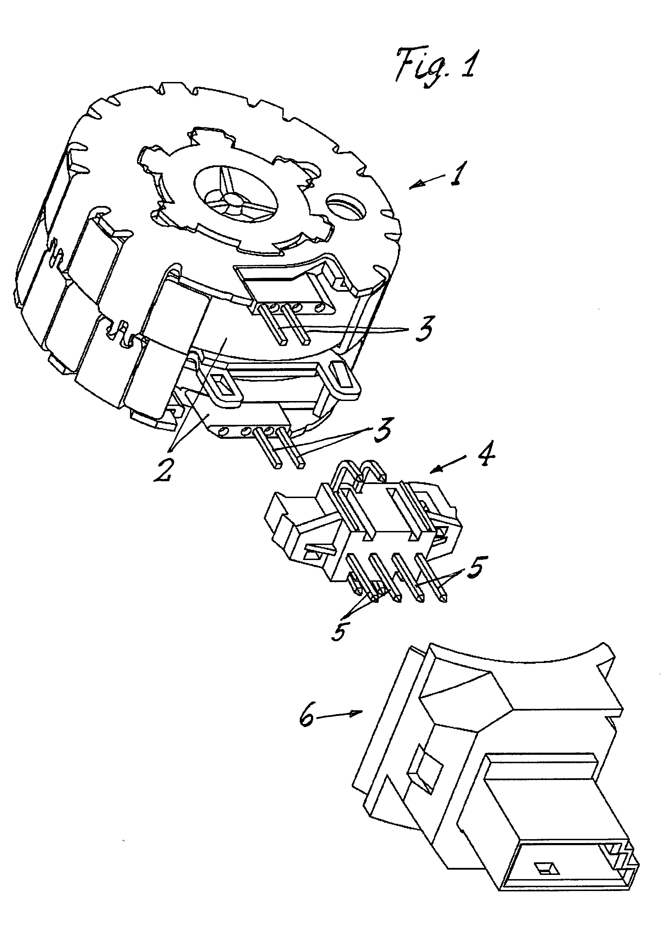

La figure 1 montre les constituants d'un ensemble connu, à savoir un moteur pas-à-pas 1. Les corps de bobines 2 portent des brochets 3. Les fils du bobinage sont soudés à ces broches. Une pièce intermédiaire 4 ou connecteur intermédiaire est muni de broches de connecteur est muni de broches de connecteur 5 et des douilles de connecteur (non représentées) susceptible de recevoir les broches 2 lorsque le connecteur intermédiaire est connecté au moteur 1. Un col du connecteur 6 peut être posé sur le connecteur intermédiaire et fixé par encliquetage au moteur 1. Les broches 3 qui traversent le col du connecteur ainsi monté servent comme broches de connexion pour un câble de commande et d'alimentation non représenté.
Cet ensemble connu ne nécessite non seulement des opérations de soudage, mais en plus un connecteur intermédiaire ce qui rend la fabrication plus chère et l'automatisation difficile ou impossible.

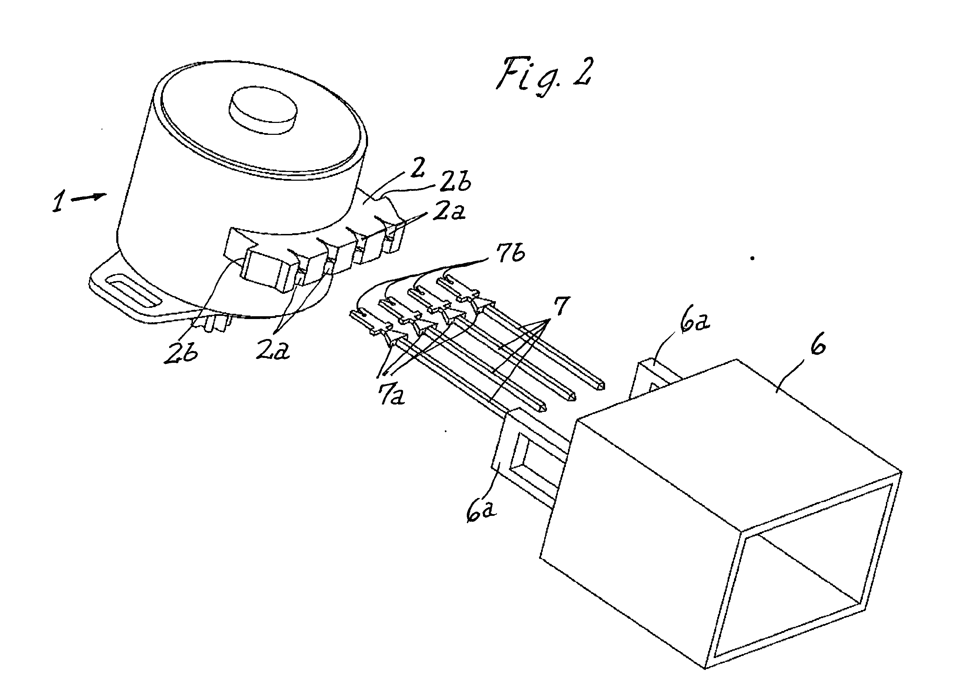

La figure 2 représente une forme d'exécution selon l'invention, particulièrement favorable pour un moteur pas-à-pas 1. Des broches du connecteur 7 sont en même temps les broches du corps de bobine du moteur. Les fils du bobinage se terminent dans des encoches 2 d'une partie extérieure 2 du ou des corps de bobine, et ils sont reliés sans soudure avec les broches 7 par introduction des fourches (7b) formées à l'extrémité intérieure des broches dans les encoches 2a. L'introduction des fourches dans les encoches peut être effectuée par enfilement d'un col de connecteur 6 sur les broches et par pression de ce col sur des épaulement 7a des broches 7. Le col de connecteur est fixé au moteur par encliquetage de ses étriers 6a derrière des épaulements 2b du corps 2.

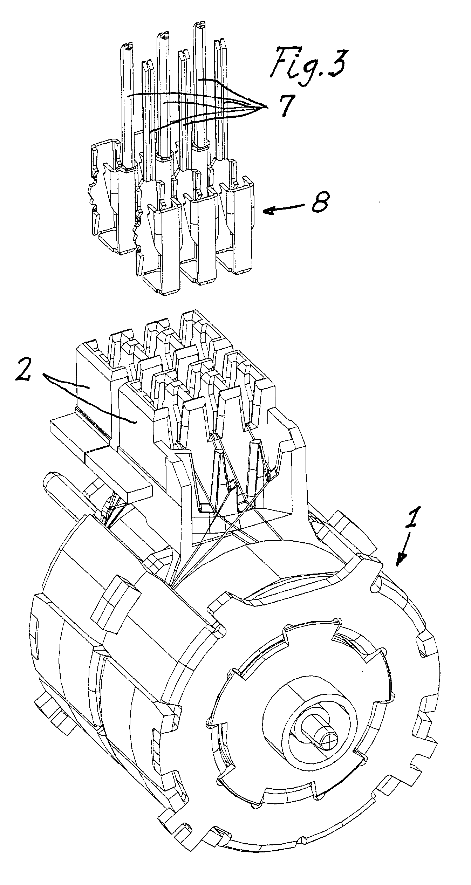

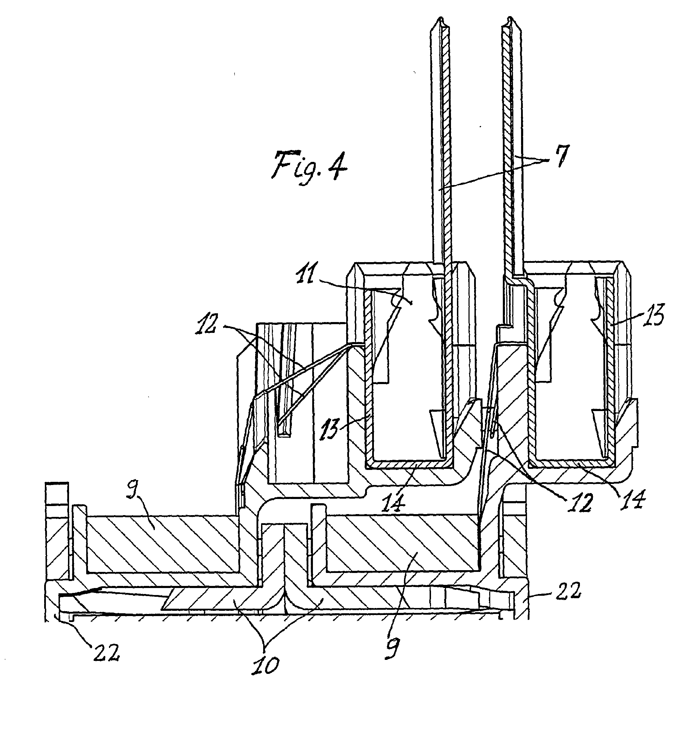

Les figures 3 et 4 montrent un exemple d'exécution pratique de l'ensemble. Le moteur 1 est muni de deux corps de bobines 22 venus d'une pièce avec les encoches dans lesquelles les fils de la ou des bobine(s) se terminent pour être reliés aux broches du connecteur. Un système de connexion 8 avec les broches du connecteur 7 est susceptible d'être assemblé avec les corps de bobines 22.
La figure 4 est une coupe détaillée de deux broches du connecteur 7, engagées dans deux corps de bobines 22 du moteur. La figure 4 montre deux bobines 9 enroulées chacune sur un corps de bobines 22 d'un stator 10. Les corps de bobine 22 présentent des encoches ou poches 11, dans lesquelles les fils 12 des bobines 9 sont amenés et galvaniquement reliés avec des zones de connexion 13 et fixés par pression lors de l'introduction de pièces de connexion et de fixation 14 sous forme de U des broches du connecteur dans les poches 11 des corps de bobine 22.
La figure 4 montre les broches 7 sans support en matière isolante selon la fig. 3. En effet, les broches 7 bien fixées dans les corps de bobine 22 pourraient servir directement, et sans être maintenu par un col de connecteur (fig. 2) ou autre moyen, au branchement à un connecteur d'un câble.
A cet effet, les pièces de connexion 14 peuvent être pourvues de dents d'ancrage ou autres moyens pour améliorer leur fixation. Les zones de connexion peuvent également présenter des dentures ou autres rugosités qui favorisent le contact galvanique avec les fils 12 lors de l'introduction des pièces de connexion dans les poches 11 des corps de bobine 22.

L'invention présente un intérêt particulier dans le domaine des petits moteurs pas-à-pas ou synchrones, mais elle n'est pas limitée à ce type de moteur.

## Revendications

1. Ensemble d'un moteur électrique et d'au moins un connecteur, **caractérisé par** des broches de connecteur (7) qui servent en même temps au branchement aux fils (12) d'enroulement du moteur et au branchement d'un connecteur de câble.

2. Ensemble selon la revendication 1, **caractérisé en ce que** les broches (7) de connecteur sont engagées dans des encoches (2a) ou poches (11) d'au moins un corps de bobine (2, 22) où elles se trouvent en contact galvanique avec les fils d'enroulement (12) amenés dans ces encoches ou poches.

3. Ensemble selon la revendication 1 ou 2, **caractérisé par** un col de connecteur (6,8) placé sur lesdites broches (7) de connecteur pour les maintenir en place et permettant l'introduction dudit connecteur de câble sur les broches (7) de connecteur qui traversent le col de connecteur.

4. Ensemble selon l'une quelconque des revendications 1 à 3, lesdites broches (7) de connecteur (7) présentant des pièces de connexion et de fixation (14) en forme de U maintenues dans des poches (11) dudit corps de bobine (22), lesdits fils (12) étant serrés entre ces pièces de connexion et de fixation (14) et la paroi desdites poches (11).

5. Procédé de fabrication de l'ensemble selon la revendication 1, **caractérisé en ce que** le moteur (1) est pourvu d'un corps de bobine (2, 22) en matière isolante avec des encoches (2a) ou poches (11) dans lesquelles les fils d'enroulement (12) sont amenés, des broches de connecteur (7) étant forcées dans lesdits encoches (2a) ou poches (11) avec leurs pièces de connexion et de fixation (2b, 14) établissant ainsi la connexion galvanique entre lesdits fils (12) et lesdites broches de connecteur.

6. Procédé selon la revendication 5, **caractérisé en ce que** un col de connecteur (6,8) est placé sur lesdites broches (7) de connecteur.

7. Procédé selon la revendication 6, **caractérisé en ce que** les dites broches de connecteur (7) sont pressées dans lesdites encoches (2a) à l'aide dudit col de connecteur (6), le col de connecteur étant fixé au moteur (1) par encliquetage (7a, 2b) après l'introduction des broches (7) de connecteur.
